# EUROPEAN PATENT APPLICATION

(11) **EP 2 099 192 A1**
(43) Date of publication of application: **09.09.2009**
(21) Application number: 09002862.2
(22) Date of filing: 27.02.2009
(51) Int. Cl.: H04L 29/06

(54) **Information providing server, program, information providing method and information providing system**

(30) Priority: 05.03.2008 JP 2008054929
(71) Applicant: Hitachi Ltd., Chiyoda-ku Tokyo 100-8280 (JP)
(72) Inventor: Kaji, Tadashi, Tokyo 100-8220 (JP); Yamamoto, Dan, Tokyo 100-8220 (JP); Fujishiro, Takahiro, Tokyo 100-8220 (JP); Irube, Shinichi, Tokyo 100-8220 (JP); Inoda, Fumihiko, Tokyo 100-8220 (JP); Ito, Akio, Tokyo 100-8220 (JP)
(74) Representative: Beetz & Partner

(57) **Abstract**

Technology is provided for easily converting data for use with a plurality of receiving devices (150). The structure-specific message generator of an information providing server (110) generates reference information by converting the data structure of information received from a transmitting device (130) into a data structure processable by a plurality of receiving devices (150). A SOAP notification generator then generates notification information for each of the receiving device (150) by replacing information at predetermined parts in the generated reference information with receiving device-specific information.

## Description

### INCORPORATION BY REFERENCE

This application claims priority based on a Japanese patent application, No. 2008-054929 filed on March 5, 2008, the entire contents of which are incorporated herein by reference.

### BACKGROUND

The present invention relates to technology for providing information received from a transmitting device to a receiving device.

There exist systems, such as IP telephones and instant messaging services, that are able to recognize the status of the other party before conducting communication. Such systems employ information providing server devices (referred to as presence servers) that collect and provide information with respect to the status of the other party (presence information).

Such systems are also used to notify the provision of information such as the latest news, program information, or press releases to users. Thus, the information providing server devices (referred to as PING servers) for the purpose of collecting and providing such information have become increasingly available.

However, when the method for describing information (i.e., the data structure) differs between the device (i.e., the transmitting device) that provides information to an information providing server device as described above and the device (i.e., the receiving device) that receives information provided by the information providing server, then in some cases the information received from the information providing server device is not correctly processed.

For cases described above, technology for managing the equipment types of the transmitting device and the receiving device on the information providing server device, and converting the information received from the transmitting device into a format processable by the receiving device (see, for example, Japanese Unexamined Patent Application Publication No. 2007-295385, hereinafter referred to as Literature 1) has been introduced.

### SUMMARY OF THE INVENTION

In the case where information to be provided to a plurality of receiving devices contains values that are differed among each of a receiving device, such as the case where the identification information for the transmitting device are differed among each of the receiving device, the case where digital signatures or message authentication codes (referred to as MACS) are added to the information to be provided to the receiving devices, or the case where dynamically generated information is included in the information to be provided to the receiving devices, the technology described in Literature 1 explains that the conversion rules to convert data for each of a receiving device need to be prepared, and thus additional load for creating such conversion rules, and processing load for converting data for each of a receiving device, is large.

The present invention provides technology to easily convert data for each of a plurality of receiving devices.

In order to solve the above problem, according to the present invention, first, the date structure of information received from the transmitting device is converted into a common data structure processable by all respective receiving devices, and then the information to each of the receiving device is generated by replacing information at predefined parts within the information for each of the receiving device In so doing, the respective information to be provided to each of the receiving device is created.

For example, an information providing server in accordance with an embodiment of the present invention provides information received from a transmitting device to a plurality of receiving devices, and comprises a memory unit that stores recipient information specifying both the transmitting device and the plurality of receiving devices to be provided with the information obtained from the transmitting device, and structure information specifying data structures and one or more receiving devices corresponding to the data structures; and a controller. The controller conducts, recipient specification processing that, upon receiving information from the transmitting device, specifies, according to the recipient information, one or more receiving devices to be provided with the information obtained from the transmitting device, data structure specification processing that specifies, according to the structure information, a data structure corresponding to the one or more receiving devices that are specified in the recipient specification processing, reference information generation processing that generates reference information by converting a data structure of the information received from the transmitting device into a data structure that is specified in the data structure specification processing, notification information generation processing that generates notification information for each of the receiving device by replacing information at predetermined parts within the reference information with receiving device-specific information that is specified in the recipient specification processing, and notification information transmission processing that transmits the receiving device-specific notification information to each of the receiving device that is specified in the recipient specification processing.

As described above, according to an embodiment of the present invention, technology to easily convert data for a plurality of receiving devices is realized.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is a schematic diagram of an information providing system.
Fig. 2 is a schematic diagram of an information providing server.
Fig. 3 is a schematic diagram of a recipient table.
Fig. 4 is a schematic diagram of a structure table.
Fig. 5 is a schematic diagram of a conversion template.
Fig. 6 is a schematic diagram of a modification table.
Fig. 7 is a schematic diagram of an ID table.
Fig. 8 is a schematic diagram of a computer.
Fig. 9 is a schematic diagram of a transmitting device.
Fig. 10 is a schematic diagram of a receiving device.
Fig. 11 is a sequence diagram illustrating exemplary processing executed in an information providing system.
Fig. 12 is a flowchart illustrating exemplary processing executed on an information providing server.
Fig. 13 is a schematic diagram of a SOAP provision request message.
Fig. 14 is a schematic diagram of a SIP notification message.
Fig. 15 is a schematic diagram of a SOAP reference notification message.
Fig. 16 is a schematic diagram of a SOAP notification message.
Fig. 17 is a schematic diagram illustrating exemplary processing executed on an information providing server.
Fig. 18 is a flowchart illustrating exemplary processing executed on a transmitting device.
Fig. 19 is a flowchart illustrating exemplary processing executed on a receiving device.

### DETAILED DESCRIPTION OF THE EMBODIMENTS

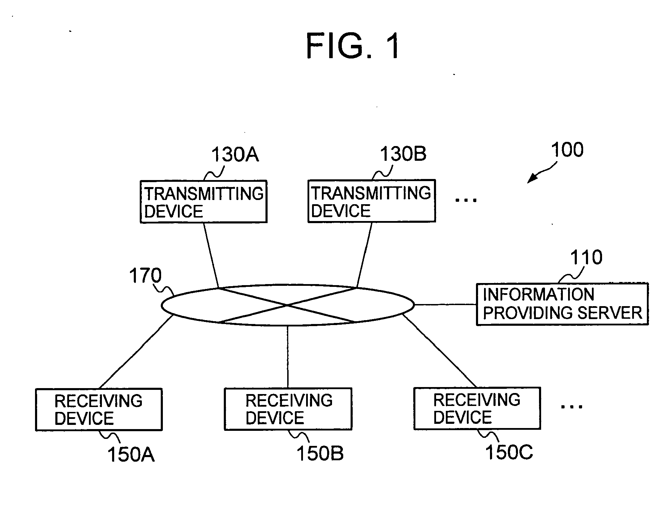

Fig. 1 is a schematic diagram of an information providing system 100 in accordance with an embodiment of the present invention.

As shown in Fig. 1, the information providing system 100 is provided with an information providing server 110, transmitting devices 130A and 130B (hereinafter referred to as the transmitting devices 130 when it is not necessary to make a particular distinction between the respective devices), and receiving devices 150A, 150B, and 150C (hereinafter referred to as the receiving devices 150 when it is not necessary to make a particular distinction among the respective devices). The above components are configured to be able to transmit and receive information among each other via a network 170.

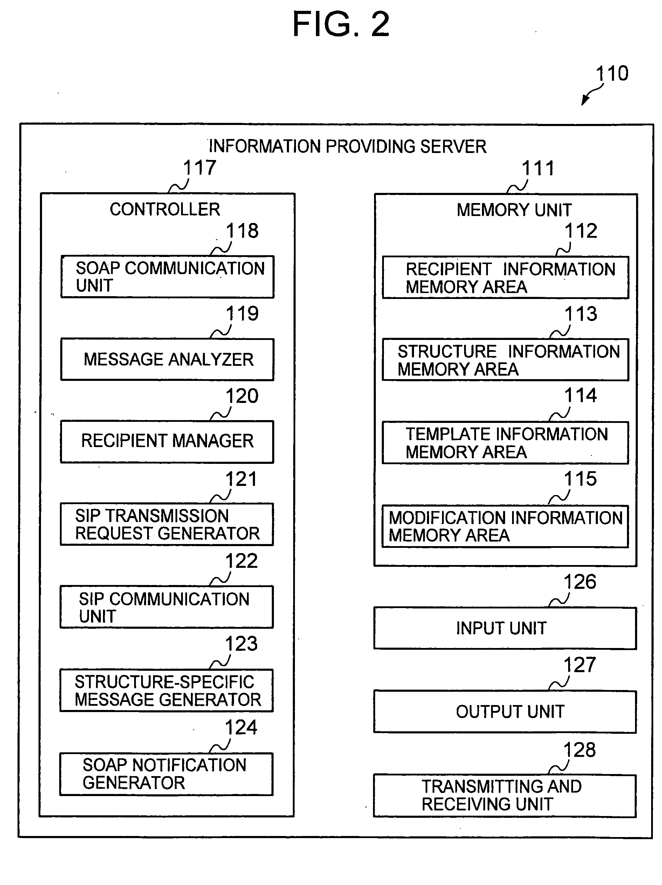

Fig. 2 is a schematic diagram of the information providing server 110.

As shown in Fig. 2, the information providing server 110 is provided with a memory unit 111, a controller 117, an input unit 126, an output unit 127, and a transmitting and receiving unit 128.

The memory unit 111 is provided with a recipient information memory area 112, a structure information memory area 113, a template information memory area 114, and a modification information memory area 115.

The recipient information memory area 112 stores both information specifying the receiving devices 150 to receive information, and information specifying the transmitting device 130 that acts as the sender of the information requested for receipt by the receiving devices 150.

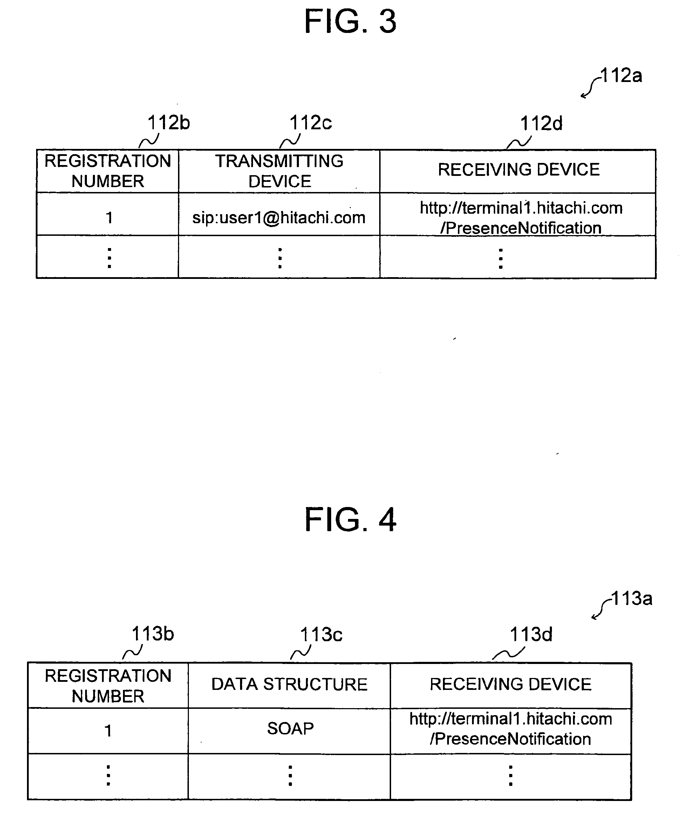

For example, in the present embodiment, a recipient table 112a is stored in the recipient information memory area 112, as shown in Fig. 3 (a schematic diagram of the recipient table 112a).

As shown in Fig. 3, the recipient table 112a comprises a registration number field 112b, a transmitting device field 112c, and a receiving device field 112d.

The registration number field 112b stores registration numbers that act as identification information for identifying individual records.

The transmitting device field 112c stores information specifying the transmitting devices 130 that provide the information requested by the receiving devices 150 specified in the receiving device field 112d to be hereinafter described. In the present embodiment, the information stored in the transmitting device field 112c to specify the transmitting devices 130 is information that specifies the respective addresses of the transmitting devices 130 (herein, SIP URIs (Session Initiation Protocol Uniform Resource Identifiers)).

The receiving device field 112d stores information specifying the receiving devices 150 that request the information provided by the transmitting devices 130 specified in the transmitting device field 112c. In the present embodiment, the information to specify the receiving devices 150 is information that specifies the respective addresses of the receiving devices 150 (herein, URLs (Uniform Resource Locators)).

Consider the case where a plurality of applications operating on the receiving devices 150 respectively request the provision of information (more particularly, consider the case where a plurality of data structures processable by each of the receiving device 150 are identified, or the case where the receiving devices 150 respectively request the provision of information from different transmitting devices 130). In this case, it is desirable to manage the provision of information by generating a new record in the recipient table 112a for each individual application, and then respectively changing the addresses stored in the receiving device field 112d to the information specifying the addresses of the applications operating on the receiving devices 150.

Returning to Fig. 2, the structure information memory area 113 stores information specifying the data structures processable by the receiving devices 150.

For example, in the present embodiment, a structure table 113a shown in Fig. 4 (a schematic diagram of a structure table 113a) is stored in the structure information memory area 113.

As shown in Fig. 4, the structure table 113a comprises a registration number field 113b, a data structure field 113c, and a receiving device field 113d.

The registration number field 113b stores registration numbers that act as identification information for identifying individual records.

The data structure field 113c stores information specifying the data structure processable by the receiving devices 150 specified in the receiving device field 113d to be hereinafter described. Herein, the information specifying data structure stored in the field 113c is information to identify respective description template corresponding to an individual description method (i.e., format) defined by a protocol such as SIP (Session Initiation Protocol) or SOAP (Simple Object Access Protocol) or the like.

In the present embodiment, a data structure identifies the structure of an XML document (i.e., a message expressed in tree form on the basis of relationships among its structural elements) defined in a schema language such as XML Schema. However, it should be appreciated that the present invention is not limited to such a configuration.

The receiving device field 113d stores information specifying the receiving devices 150 to receive information provided by the transmitting devices 130 in the data structure specified in the data structure field 113c. In the present embodiment, the information to specify the receiving devices 150 is information that specifies the respective addresses of the receiving devices 150 (herein, URLs).

Consider the case where there exists a plurality of data structures processable by the receiving devices 150 (for example, the case where a plurality of data structures processable by the respective applications on the receiving devices 150 are identified). In this case, it is desirable to manage the provision of information by generating a new record for each processable data structure, and then respectively changing the addresses stored in the receiving device field 113d to the addresses of the applications operating on the receiving devices 150.

The template information memory area 114 stores information specifying a conversion template for converting the data structure for each combination of a data structure corresponding to one of the transmitting devices 130 and a data structure corresponding to one of the receiving devices 150. In the present embodiment, data that is converted with the use of a conversion template stored in the template information memory area 114 is referred to as reference data.

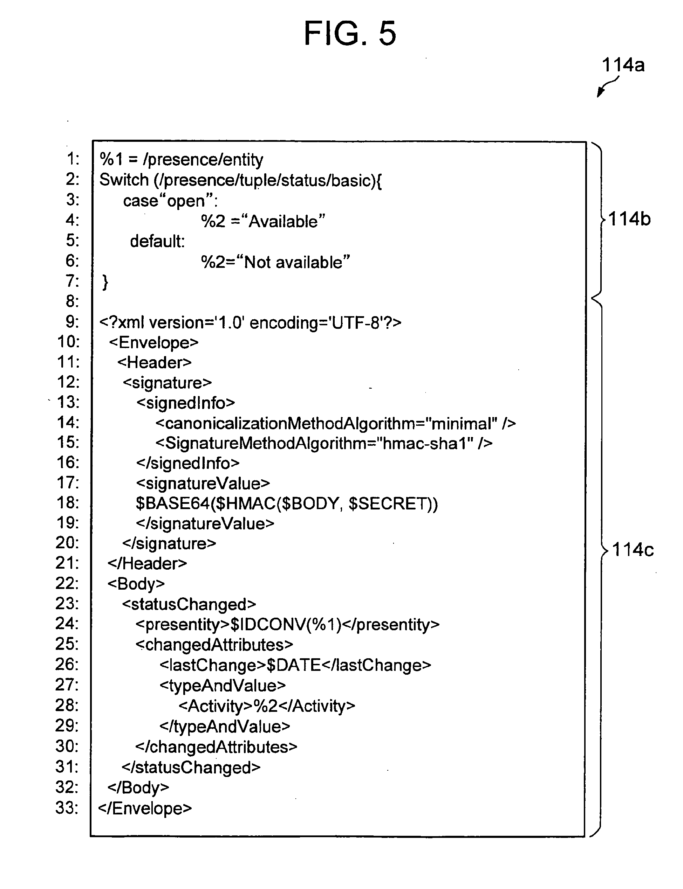

For example, the template information memory area 114 may store a conversion template 114a as shown in Fig. 5 (a schematic diagram of the conversion template 114a). The conversion template 114a is for converting a SIP notification message (herein, a NOTIFY message) for notifying status information of the transmitting devices 130 into a SOAP notification message that acts as the reference data herein.

The numbers on the left edge of Fig. 5 are line numbers indicating the lines of the conversion template 114a.

The conversion template 114a comprises a conversion instructions area 114b and a template area 114c.

The conversion instructions area 114b is an area stating conversion instructions for converting the template stored in the template area 114c (to be hereinafter described) according to information transmitted by the transmitting devices 130.

In the template area 114c, a data according to the post-conversion data structure (i.e., the template) is described.

In the present embodiment, the template stored in the template area 114c includes portions whose values change depending on the particular receiving device 150, such as ID portions. Stored in these portions are modification instructions (commands) for modifying values on the basis of information or the like stored in the modification information memory area 115, to be hereinafter described.

For example, in the conversion template 114a shown in Fig. 5, the dollar sign ($) is used to distinguish modification instructions.

The modification information memory area 115 stores information for modifying values stored in reference data that is converted with the use of a conversion template stored in the template information memory area 114.

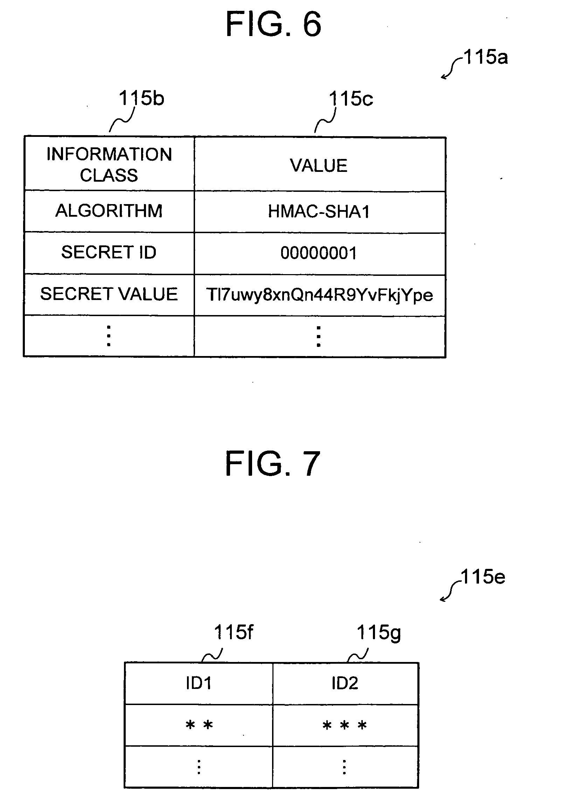

For example, in the present embodiment, a modification table 115a shown in Fig. 6 (a schematic diagram of the modification table 115a) and an ID table 115e shown in Fig. 7 (a schematic diagram of the ID table 115e) are stored in each of the receiving device 150.

As shown in Fig. 6, the modification table 115a comprises an information class field 115b and a value field 115c.

The information class field 115b stores information specifying the classes of the values stored in the value field 115c to be hereinafter described.

The value field 115c stores information specifying values for generating values to be stored in the reference data.

It should be appreciated that the information stored in the modification table 115a may be acquired from the receiving devices 150 or received as input via the input unit 126 in advance. Furthermore, a portion of the information stored in the modification table 115a may be acquired from the receiving devices 150, with the remaining information received as input via the input unit 126 in advance.

As shown in Fig. 7, the ID table 115e comprises an ID1 field 115f and an ID2 field 115g.

The ID1 field 115f stores information specifying another device ID.

The ID2 field 115g stores, with respect to an ID specified in the ID1 field 115f, information specifying an ID recognized by the receiving device 150 corresponding to the ID table 115e. In other words, a single record in the ID table 115e contains an ID stored in the ID1 field 115f in association with an ID recognized by a receiving device 150.

Returning to Fig. 2, the controller 117 is provided with a SOAP communication unit 118, a message analyzer 119, a recipient manager 120, a SIP transmission request generator 121, a SIP communication unit 122, a structure-specific message generator 123, and a SOAP notification generator 124.

The SOAP communication unit 118 controls communication in accordance with the SOAP protocol. Specifically, in the present embodiment, the SOAP communication unit 118 controls processing for transmitting a SOAP notification message generated by the SOAP notification generator 124 to a receiving device 150 via the transmitting and receiving unit 128, and processing for receiving, via the transmitting and receiving unit 128, a SOAP provision request message transmitted by a receiving device 150.

The message analyzer 119 analyzes a SOAP provision request received via the transmitting and receiving unit 128, and then executes processing to store required information in the structure table 113a, the modification table 115a, and the ID table 115e.

The recipient manager 120 acquires information from a SOAP provision request received via the transmitting and receiving unit 128. Specifically, the recipient manager 120 acquires the information specifying both the transmitting device 130 providing the information and the receiving device 150 to be provided with the information obtained from the transmitting device 130. The recipient manager 120 then executes processing to store the information specifying the addresses of the above devices in the recipient table 112a.

The SIP transmission request generator 121 generates, according to the SIP protocol, a transmission request message (i.e., a SIP message for requesting transmission) specifying the address of the information providing server 110 (for example, a message may be generated using a SUBSCRIBE message). The SIP transmission request generator 121 then outputs the generated message to the SIP communication unit 122.

The SIP communication unit 122 controls communication in accordance with the SIP protocol. Specifically, in the present embodiment, the SIP communication unit 122 controls processing for transmitting a SIP transmission request message generated by the SIP transmission request generator 121 to a transmitting device 130 via the transmitting and receiving unit 128, and processing for receiving, via the transmitting and receiving unit 128, a SIP notification message transmitted by a transmitting device 130.

The structure-specific message generator 123 executes processing to convert the data structure of a message received from a transmitting device 130 into a data structure processable by the receiving devices 150 by a conversion template stored in the template information memory area 114.

Herein, in the present embodiment, the transmitting devices 130 are assumed to transmit messages according to SIP, while the receiving devices 150 are assumed to process messages according to SOAP. Consequently, in the present embodiment, the structure-specific message generator 123 herein is assumed to convert SIP messages into SOAP messages, which acts as the reference data herein.

The SOAP notification generator 124 first takes information specified by modification instructions stored in a reference SOAP message that is converted by the structure-specific message generator 123. Then, for each of the receiving device 150 to be provided with the message, the SOAP notification generator 124 specifies the above information using the modification table 115a and the ID table 115e. The SOAP notification generator 124 then executes the processes specified by the modification instructions and stores the executed information in the reference SOAP messages. In so doing, the SOAP notification generator 124 generates a SOAP notification message containing notification data for each of the receiving device 150.

The SOAP notification generator 124 subsequently outputs the generated SOAP notification messages to the SOAP communication unit 118.

The input unit 126 accepts information input.

The output unit 127 outputs information.

The transmitting and receiving unit 128 transmits and receives information via the network 170.

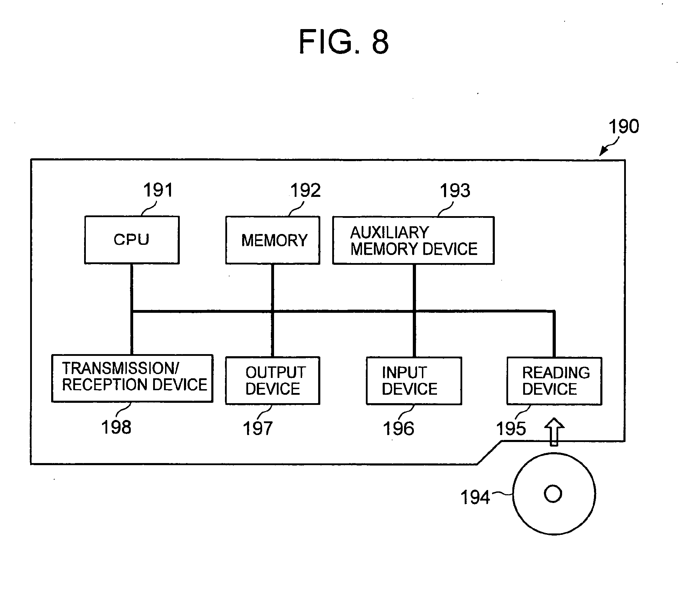

As shown by way of example in Fig. 8 (a schematic diagram of a computer 190), the information providing server 110 described above may be realized by means of a general computer provided with a CPU (Central Processing Unit) 191, memory 192, an auxiliary memory device 193 such as an HDD (Hard Disk Drive), a read device 195 that reads information from a portable storage medium 194 such as a CD-ROM (Compact Disc Read-Only Memory) or DVD-ROM (Digital Versatile Disc Read-Only Memory), input devices 196 such as a keyboard and mouse, an output device 197 such as a display, and a NIC (Network Interface Card) or similar communication device 198 for coupling to a communication network.

For example, the memory unit 111 may be realized by means of the CPU 191 if the CPU utilizes the memory 192 or the auxiliary memory device 193. The controller 117 may be realized by loading a designated program stored in the auxiliary memory device 193 into the memory 192 and executing the program by the CPU 191. The input unit 126 may be realized by means of the CPU 191 if the CPU utilizes the input devices 196. The output unit 127 may be realized by means of the CPU 191 if the CPU utilizes the output device 197. The transmitting and receiving unit 128 may be realized by means of the CPU 191 if the CPU the communication device 198.

The designated program may also be executed in a manner that first the program is transferred from the storage medium 194 via the read device 195 or downloaded to the auxiliary memory device 193 from a network via the communication device 198, then loaded into the memory 192 and executed by the CPU 191. In addition, the designated program may also be executed in a manner that the program is loaded directly into the memory 192 from the storage medium 194 via the read device 195 or from a network via the communication device 198, and then executed by the CPU 191.

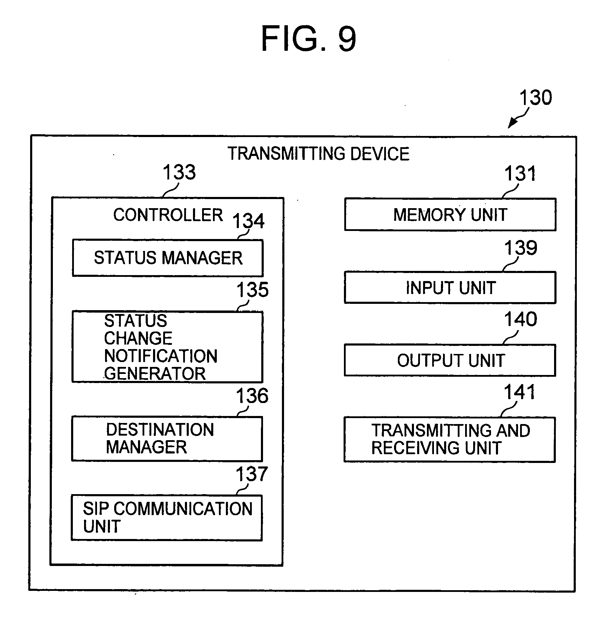

Fig. 9 is a schematic diagram of a transmitting device 130.

As shown in Fig. 9, a transmitting device 130 is provided with a memory unit 131, a controller 133, an input unit 139, an output unit 140, and a transmitting and receiving unit 141.

The memory unit 131 stores information required for processing by the transmitting device 130. Specifically, in the present embodiment, the memory unit 131 stores information specifying the address of the information providing server 110 that transmits information.

The controller 133 is provided with a status manager 134, a status change notification generator 135, a destination manager 136, and a SIP communication unit 137.

The status manager 134 manages the status of the transmitting device 130 (offline or online, for example).

It should be appreciated that although the status of the transmitting device 130 is managed in the present embodiment, the present invention is not limited to a configuration described above, and the status of another devices coupled via the network 170 or other wired or wireless technique may be managed, and the information providing server 110 is notified of changes in the status of the other devices.

If a change occurs in the status managed by the status manager 134, the status change notification generator 135 generates transmission data for notifying the information providing server 110 of the change in the status. In the present embodiment, a SIP notification message is generated using the SIP NOTIFY message as the transmission data.

The destination manager 136 executes processing to extract the address of the information providing server 110 contained in the SIP transmission request message input by the SIP communication unit 137, and then store these extracted addresses in the recipient table 112a.

The SIP communication unit 137 controls communication in accordance with the SIP protocol. Specifically, in the present embodiment, the SIP communication unit 137 controls processing for transmitting a SIP notification message generated by the status change notification generator 135 via the transmitting and receiving unit 141, and processing for receiving, via the transmitting and receiving unit 141, a SIP transmission request message transmitted by the information providing server 110.

The input unit 139 accepts information input.

The output unit 140 outputs information.

The transmitting and receiving unit 141 transmits and receives information via the network 170.

The transmitting device 130 described above may, for example, be realized by a general computer 190 shown in Fig. 8.

For example, the memory unit 131 may be realized by means of the CPU 191 if the CPU utilizes the memory 192 or the auxiliary memory device 193. The controller 133 may be realized by loading a designated program stored in the auxiliary memory device 193 into the memory 192 and executing the program by the CPU 191. The input unit 139 may be realized by means of the CPU 191 if the CPU utilizes the input devices 196. The output unit 140 may be realized by means of the CPU 191 if the CPU utilizes the output device 197. The transmitting and receiving unit 141 may be realized by means of the CPU 191 if the CPU utilizes the communication device 198.

The designated program may also be executed in a manner that first the program is transferred from the storage medium 194 via the read device 195 or downloaded to the auxiliary memory device 193 from a network via the communication device 198, then loaded into the memory 192 and executed by the CPU 191. In addition, the designated program may also be executed in a manner that the program is loaded directly into the memory 192 from the storage medium 194 via the read device 195 or from a network via the communication device 198, and then executed by the CPU 191.

Furthermore, in addition to the general computer 190, the transmitting device 130 may also be realized by means of a mobile terminal, a mobile telephone, or a SIP terminal having a CPU 191, memory 192, an auxiliary memory device 193, an input device 196, an output device 197, and a communication device 198, for example.

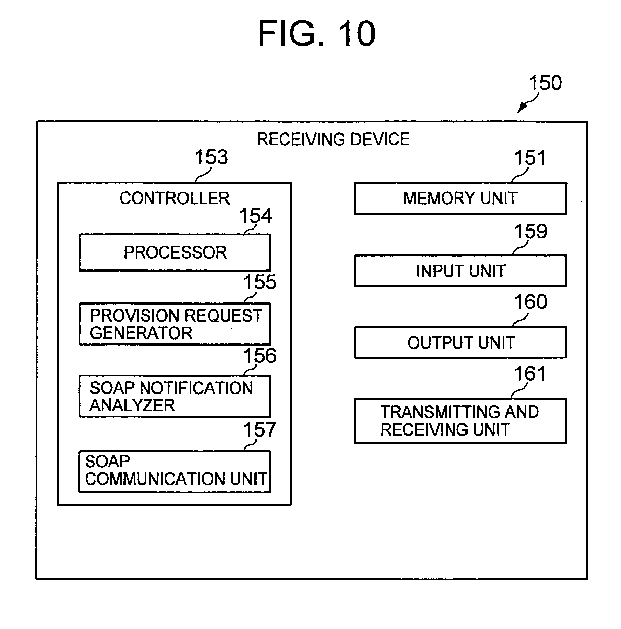

Fig. 10 is a schematic diagram of a receiving device 150.

As shown in Fig. 10, the receiving device 150 is provided with a memory unit 151, a controller 153, an input unit 159, an output unit 160, and a transmitting and receiving unit 161.

The memory unit 151 stores information required for processing by the receiving device 150. Specifically, in the present embodiment, the memory unit 151 stores information specifying the values requested to be changed for each receiving devices 150.

The controller 153 is provided with a processor 154, a provision request generator 155, a SOAP notification analyzer 156, and a SOAP communication unit 157.

The processor 154 conducts processing according to the status of the transmitting devices 130 obtained from the information providing server 110. For example, in the present embodiment, the processor 154 conducts processing for displaying, on the output unit 160, information specifying whether each transmitting device 130 is in an online status or an offline status. However, the present invention is not limited to a configuration described above.

The provision request generator 155 generates, according to the SOAP protocol, a SOAP provision request message containing the information specifying the address of the receiving device 150 itself, information specifying the transmitting device 130 for which status information is requested, information specifying the data structure processable by the receiving device 150 itself, and information specifying the values to be used for modifying values to those of the receiving device 150 itself.

The provision request generator 155 then outputs the generated SOAP provision request message to the SOAP communication unit 157.

The SOAP notification analyzer 156 analyzes a SOAP notification message input from the SOAP communication unit 157, specifies the required information (the status of a transmitting device 130, for example), and then outputs the message to the processor 154.

The SOAP communication unit 157 controls communication in accordance with the SOAP protocol. Specifically, in the present embodiment, the SOAP communication unit 157 controls processing for transmitting, via the transmitting and receiving unit 161, a SOAP provision request message generated by the provision request generator 155, and processing for receiving, via the transmitting and receiving unit 161, a SOAP notification message transmitted by the information providing server 110.

The input unit 159 accepts information input.

The output unit 160 outputs information.

The transmitting and receiving unit 161 transmits and receives information via the network 170.

The receiving device 150 described above may, for example, be realized by a general computer 190 shown in Fig. 8.

For example, the memory unit 151 may be realized by the CPU 191 using the memory 192 or the auxiliary memory device 193. The controller 153 may be realized by loading a designated program stored in the auxiliary memory device 193 into the memory 192 and executed by the CPU 191. The input unit 159 may be realized by the CPU 191 using the input devices 196. The output unit 160 may be realized by the CPU 191 using the output device 197. The transmitting and receiving unit 161 may be realized by the CPU 191 using the communication device 198.

The designated program may also be executed in a manner that first the program is transferred from the storage medium 194 via the read device 195 or downloaded to the auxiliary memory device 193 from a network via the communication device 198, then loaded into the memory 192 and executed by the CPU 191. In addition, the designated program may also be executed in a manner that the program is loaded directly into the memory 192 from the storage medium 194 via the read device 195 or from a network via the communication device 198, and then executed by the CPU 191.

Furthermore, in addition to the general computer 190, the receiving device 150 may also be realized by means of a mobile terminal, a mobile telephone, or a SIP terminal having a CPU 191, memory 192, an auxiliary memory device 193, an input device 196, an output device 197, and a communication device 198, for example.

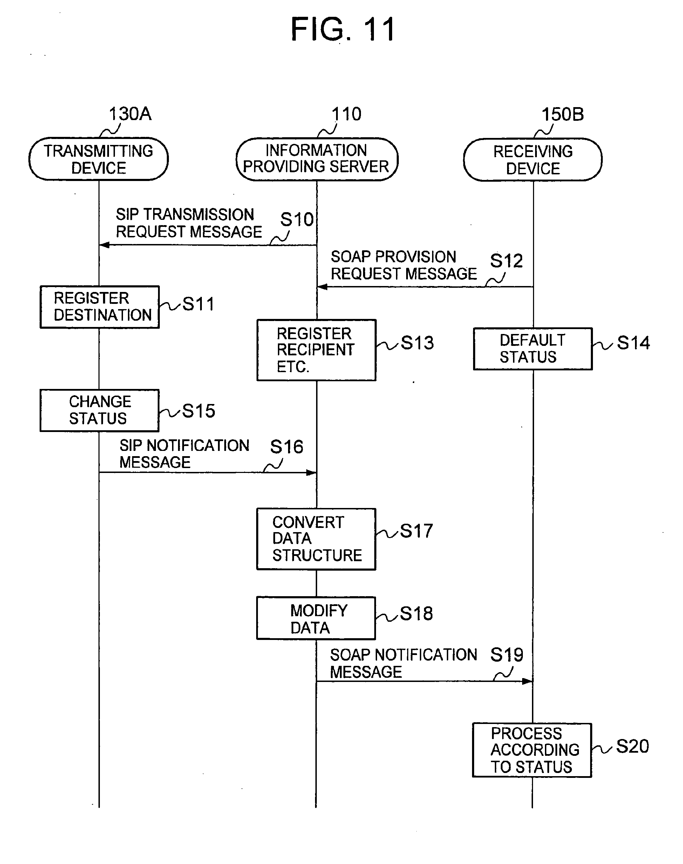

Fig. 11 is a sequence diagram illustrating processing executed in the information providing system 100. Herein, the processing executed when the receiving device 150B acquires status information from the transmitting device 130A via the information providing server 110 is described by way of example, but the present invention is not limited to such a configuration.

First, the SIP transmission request generator 121 of the information providing server 110 generates a SIP transmission request message and outputs the message to the SIP communication unit 122. The SIP communication unit 122 then transmits the SIP transmission request message to the transmitting device 130A via the transmitting and receiving unit 128 (S10).

Upon receiving the above SIP transmission request message, the destination manager 136 of the transmitting device 130A stores, in the memory unit 131, the address of the information providing server 110 contained in the SIP transmission request message (S11).

In addition, the provision request generator 155 of the receiving device 150B generates a SOAP provision request message containing information specifying the address of the receiving device 150B, information specifying the transmitting device 130A for which status information is requested, information specifying the data structure processable by the receiving device 150B, and information specifying the values to be used in order to modify the message for the receiving device 150B. The provision request generator 155 then outputs the generated message to the SOAP communication unit 157. Then, the SOAP communication unit 157 transmits the SOAP provision request message to the information providing server 110 via the transmitting and receiving unit 161 (S12).

Upon receiving the above SOAP provision request message, the message analyzer 119 and the recipient manager 120 of the information providing server 110 extract required information from the received SOAP provision request message, and then store the extracted information in the memory unit 111 (S 13).

More specifically, the message analyzer 119 extracts, from the received SOAP provision request message, the information specifying the processable data structure and the information specifying the address of the receiving device 150B, and then stores the above information in the structure table 113a in a mutually associated manner. In addition, the message analyzer 119 also stores, in the modification table 115a, the information specifying the values to be used in order to modify the message for the receiving device 150B.

The recipient manager 120 extracts, from the received SOAP provision request message, the information specifying the transmitting device 130A. The recipient manager 120 then searches the ID2 field 115g of the ID table 115e to obtain information specifying the address of the transmitting device 130A stored in the ID1 field 115f of the corresponding record.

Subsequently, the recipient manager 120 stores the information specifying the address of the transmitting device 130A obtained as above and the information specifying the address of the receiving device 150B extracted from the received SOAP provision request message in the recipient table 112a in a mutually associated manner.

In addition, in the present sequence, the processor 154 of the receiving device 150B displays default status information on the output unit 160 indicating that the transmitting device 130A is offline (S14).

Subsequently, if the status manager 134 of the transmitting device 130A detects that the status of the transmitting device 130A has changed (herein, a change from an offline status to an online status) (S15), then the status change notification generator 135 generates a SIP notification message (i.e., a NOTIFY message) containing information specifying that the status has changed. The SIP communication unit 137 then transmits the generated message to the address of the destination (herein, the information providing server 110) stored in the memory unit 131 (S16).

Upon receiving the above SIP notification message, the structure-specific message generator 123 of the information providing server 110 specifies the data structure processable by the receiving device 150 requesting information from the transmitting device 130A. The structure-specific message generator 123 then uses a conversion template stored in the template information memory area 114 to convert the data structure into reference data and thereby generate a SOAP reference notification message (S 17).

Subsequently, the SOAP notification generator 124 of the information providing server 110, according to the modification instructions stored in the SOAP reference notification message that is generated in step S 17, generates values for the receiving device 150B that is requesting information from the transmitting device 130A from the values stored in the modification table 115a and the ID table 115e contained in the modification information memory area 115 in association with the receiving device 150B. The SOAP notification generator 124 then stores the generated values in the SOAP reference notification message, and thereby generates a SOAP notification message that is herein used as the notification data issued to the receiving device 150B (S 18).

Subsequently, the SOAP communication unit 118 of the information providing server 110 transmits the SOAP notification message generated by the SOAP notification generator 124 to the receiving device 150B via the transmitting and receiving unit 128 (S19).

Upon receiving the above SOAP notification message, the SOAP notification analyzer 156 of the receiving device 150B analyzes the received SOAP notification message, and thereby determines that the transmitting device 130A is in an online status. The processor 154 then executes processing according to the status of the transmitting device 130A specified in the received SOAP notification message (S20). Herein, the processor 154 executes processing to display information on the output unit 160 indicating that the transmitting device 130A is in an online status.

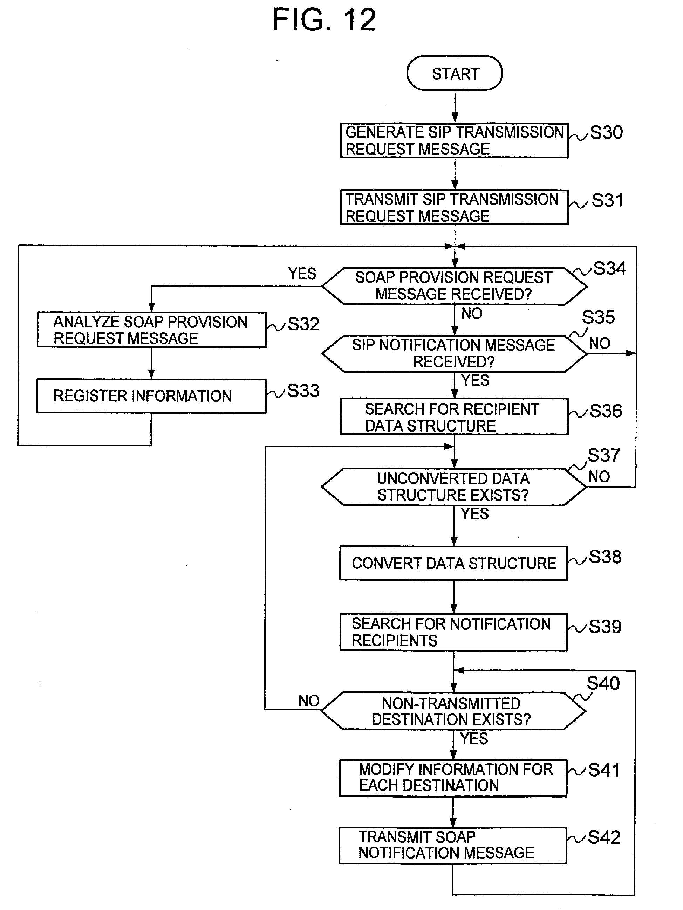

Fig. 12 is a flowchart illustrating processing executed by the information providing server 110.

Once the information providing server 110 initiates operation, the SIP transmission request generator 121 first generates SIP transmission request messages with respect to all transmitting devices 130 (S30). The generated messages contain at least the address information of the information providing server 110. The SIP communication unit 122 then transmits the messages to the individual transmitting devices 130 via the transmitting and receiving unit 128 (S31).

In the present embodiment, the SIP transmission request message uses the SUBSCRIBE message stipulated in RFC 3265, and for this reason detailed description thereof is omitted herein. However, it should be appreciated that the present invention is not limited to such SUBSCRIBE messages, and that various standard, well-defined messages or independently defined messages may also be used.

Next, the SOAP communication unit 118 of the information providing server 110 confirms whether or not a new SOAP provision request message is received from a receiving device 150 via the transmitting and receiving unit 128 (S34). If a new SOAP message is received (step S34: Yes), then the process proceeds to step S32. If a new SOAP message is not received (step S34: No), then the process proceeds to step S35.

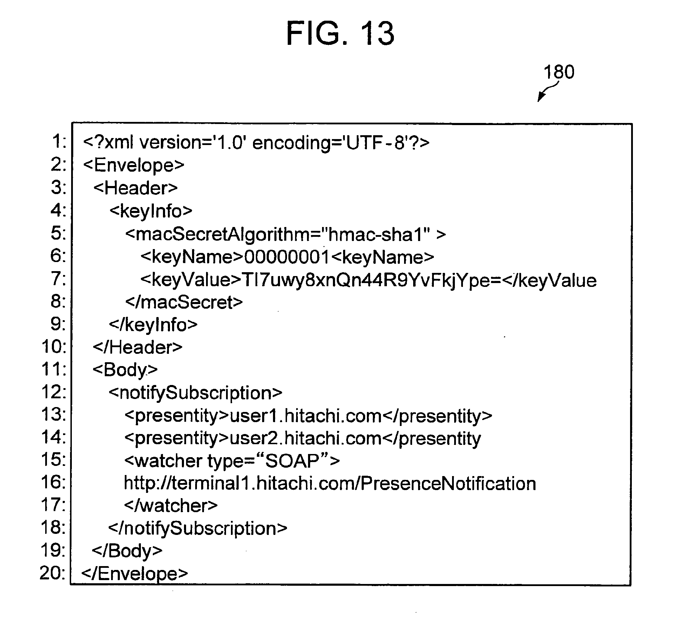

Fig. 13 is a schematic diagram of a SOAP provision request message 180. The numbers on the left edge of Fig. 13 are line numbers indicating the lines of the SOAP provision request message 180.

As shown in Fig. 13, the body of the SOAP provision request message 180 (i.e., lines 11 to 19) status identification information for the transmitting devices 130 for which information is requested (lines 13 and 14), and information for specifying the receiving device 150 (lines 15 to 17). In addition, line 15 status information (type = "SOAP") specifying the data structure processable by the receiving device 150.

In addition, the header of the SOAP message (i.e., lines 3 to 10) contains information specifying the hash function used to generate a MAC (Message Authentication Code) (line 5), and information specifying a key (i.e., secret information) used to generate the MAC (lines 6 and 7).

Returning to Fig. 12, in step S32, the message analyzer 119 analyzes the SOAP provision request message that is received in step S34, and then extracts required information from predetermined elements and attribute values (S32).

More specifically, the message analyzer 119 extracts the information "hmac-shal" that specifies the hash function stated as the "Algorithm" attribute value of the "macSecret" element in the header of the SOAP provision request message 180 shown in Fig. 13. The message analyzer 119 then generates a modification table 115a in a manner that the modification table 115a is associating with the identification information for the receiving device 150 that transmitted the SOAP provision request message 180, and then generates a new record in the modification table 115a. Information specifying "Algorithm" is stored in the information class field 115b of the newly-generated record, while information specifying "hmac-sha1" is stored in the value field 115c of the record.

In addition, the message analyzer 119 also extracts the key ID "00000001" stated as the value of the "keyName" element in the header of the SOAP provision request message 180 shown in Fig. 13. The message analyzer 119 then generates a new record in the modification table 115a in association with the identification information for the receiving device 150 that transmitted the SOAP provision request message 180. Information specifying "Secret ID" is stored in the information class field 115b of the new record, while information specifying "00000001" is stored in the value field 115c of the record.

In addition, the message analyzer 119 also extracts the key information "T17uwy8xnQn44R9YvFkjYpe=" stated as the value of the "keyValue" element in the header of the SOAP provision request message 180 shown in Fig. 13. The message analyzer 119 then generates a new record in the modification table 115a in association with the identification information for the receiving device 150 that transmitted the SOAP provision request message 180.. Information specifying "Secret Value" is stored in the information class field 115b of the new record, while information specifying "T17uwy8xnQn44R9YvFkjYpe=" is stored in the value field 115c of the record.

In addition, the message analyzer 119 extracts the information "SOAP" specifying the data structure stated as the value of the "type" attribute of the "watcher" element, and the address information "http://terminall.hitachi.com/PresenceNotification" of the receiving device 150 stated as the value of the "watcher" element in the body of the SOAP provision request message 180 shown in Fig. 13. The message analyzer 119 then generates a new record in the structure table 113a, and information specifying the identification number of the individual record (i.e., the number following that of the previous record) is stored in the registration number field 113b of the newly-generated record, information specifying "SOAP" is stored in the data structure field 113c of the record. Then, information specifying "http://terminall.hitachi.com/PresenceNotification" is stored in the receiving device field 113d of the record.

In addition, the message analyzer 119 extracts, from the "presentity" element", the identification information for the transmitting device 130 having the information to be obtained, and the address information of the receiving device 150 stated as the value of the "watcher" element in the body of the SOAP provision request message 180 shown in Fig. 13. The message analyzer 119 then outputs the above extracted information to the recipient manager 120.

Subsequently, upon acquiring the above information, the recipient manager 120 generates a new record in the recipient table 112a, and information specifying the identification number of the individual record (i.e., the number following that of the previous record) is stored in the registration number field 112b of the newly-generated record. Then, information specifying address information corresponding to the identification information for the transmitting device 130 (i.e., the SIP URI, acquired from the ID table 115e) is stored in the transmitting device field 112c of the record, and information specifying the address information of the receiving device 150 is stored in the receiving device field 112d of the record (S33).

On the other hand, in step S35, the SIP communication unit 122 confirms whether or not a new SIP notification message is received. If a new SIP notification message is not received, then the process returns to step S34 and is repeated again. If a new SIP notification message is received, then the process proceeds to step S36.

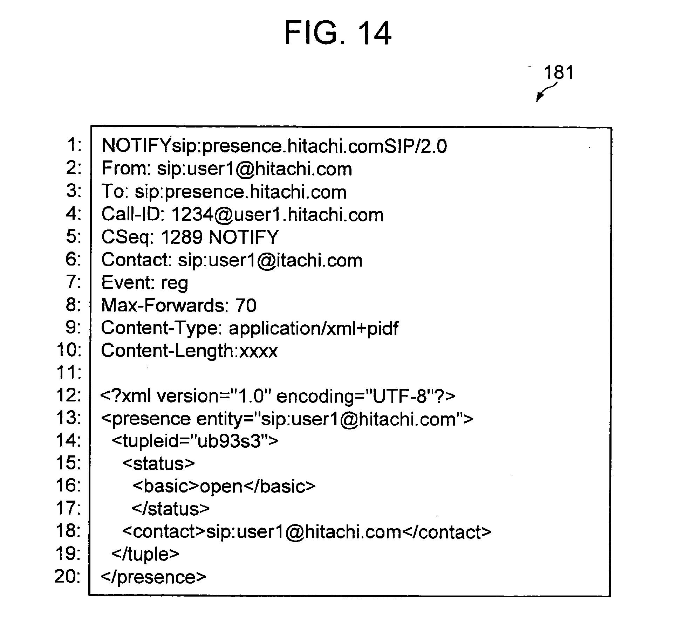

Fig. 14 is a schematic diagram of a SIP notification message 181. The numbers on the left edge of Fig. 14 are line numbers indicating the lines of the SIP notification message 181.

As shown in Fig. 14, the body of the SIP notification message 181 (i.e., lines 12 to 20) contains the information "sip:userl@hitachi.com" specifying the SIP URI of the transmitting device 130 acting as the sender herein and stated as the value of the "entity" attributed of the "presence" element, and the status information "open" specifying the status of the transmitting device 130 acting as the sender herein and stated as the value of "basic" sub-element of the "status" element. (Herein, "open" represents an online status, while "close" represents an offline status.)

Returning to Fig. 12, in step S36, the recipient manager 120 specifies, from the recipient table 112a, the address of the receiving device 150 associated with the address information of the transmitting device 130 that transmitted the received SIP notification message. The recipient manager 120 then outputs the specified address to the structure-specific message generator 123. The structure-specific message generator 123 then specifies, from the structure table 113a, the data structures associated with the address information that is input.

Next, the structure-specific message generator 123 confirms whether or not there exist data structures from among those specified in step S36 that have not yet undergone data structure conversion in the following step S38 (S37). If unconverted data structures do exist (step S37: Yes), then the process proceeds to step S38. If unconverted data structures do not exist (step S37: No), then the process returns to step S34 and is repeated again.

In step S38, the structure-specific message generator 123 converts the SIP notification message received in step S35 into the data structures which remain unconverted among the data structures specified in step S36 (herein, messages are taken to be converted into a data structure identified as SOAP).

More specifically, the structure-specific message generator 123 acquires, from the template information memory area 114, a conversion template 114a for converting the SIP notification message into the data structures which remain unconverted among the data structures specified in step S36. The structure-specific message generator 123 extracts the template stored in the template area 114c of the conversion template 114a and then processes the extracted template according to the conversion instructions stored in the conversion instructions area 114b of the conversion template 114a. In so doing, the structure-specific message generator 123 converts the SIP notification message into a SOAP reference notification message (i.e., reference data in the data structure to be converted).

For example, in the conversion template 114a shown in Fig. 5, line 1 in the conversion instructions area 114b designates that the value specified by the path "/presence/entity" in the SIP message to be converted (herein, the SIP notification message 181) is to be substituted to the template variable "%1" (line 24) stated in the template area 114c. In addition, lines 2 to 7 in the conversion instructions area 114b designate that the template variable "%2" is to be substituted to the value "Available" if the value specified by the "/presence/tuple/status/basic" in the SIP message to be converted (herein, the SIP notification message 181) is "open", and "Not Available" if the above is a value other than "open".

Consequently, the structure-specific message generator 123 analyzes the SIP notification message 181 and generates an XML tree, searches for the values of particular parts, and substitutes to variables. Next, the structure-specific message generator 123 outputs the template stated in the template area 114c while replacing the values of the parts designated as "%1" (line 24) and "%2" (line 28) with the values designated in the conversion instructions area 114b, and then outputs the result as a SOAP reference notification message.

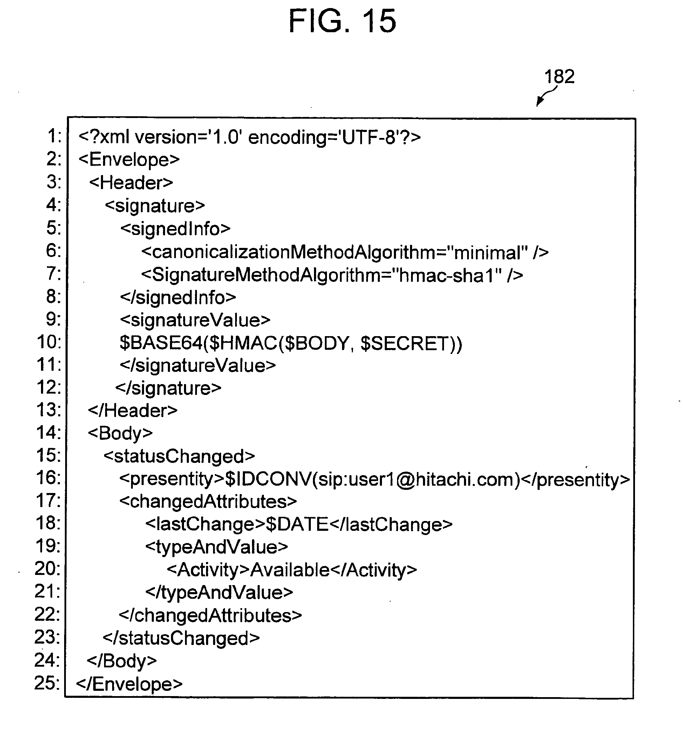

Fig. 15 is a schematic diagram of a SOAP reference notification message 182 that is converted from the SIP notification message 181 shown in Fig. 14. The numbers on the left edge of Fig. 15 are line numbers indicating the lines of the SOAP reference notification message 182.

As shown in Fig. 15, in the body of the SOAP reference notification message 182 (i.e., lines 14 to 24), the information "SIP:user1@hitachi.com" specifying the SIP URI of the transmitting device 130 specified by the path "/presence/entity" in the SIP notification message 181 is stored as the value of the "presentity" element in line 16, while the information specifying "Available" that corresponds to the value "open" specified by the path "/presence/tuple/status/basic" in the SIP notification message 181 is stored as the value of the "Activity" element in line 20.

Returning to Fig. 12, in step S39, the SOAP notification generator 124 searches the recipient table 112a for receiving devices 150 corresponding to the data structure used to generate the SOAP reference notification message in step S38 (S39).

Subsequently, the SOAP notification generator 124 specifies, from among the receiving devices 150 found by search in step S39, whether or not there exist receiving devices 150 to which information is not yet transmitted (S40). If there exist receiving devices 150 to which information is not yet transmitted (step S40: Yes), then the process proceeds to step S41. If there do not exist receiving devices 150 to which information is not yet transmitted (step S40: No), then the process returns to step S37 and is repeated.

In step S41, the SOAP notification generator 124 rewrites the parts in the SOAP reference notification message 182 designated to be rewritten with different values for each device in a manner that the parts are rewritten in accordance with predetermined method designated for each part. In so doing, the SOAP notification generator 124 generates a SOAP notification message for each device.

For example, in the SOAP reference notification message 182 shown in Fig. 15, the symbol "$" is used as identification information to indicate the parts where the modification instructions for rewriting different values for each device are stored.

More specifically, the modification instructions stated as "$BASE64($HMAC($BODY,$SECRET))" and stored in line 10 of the SOAP reference notification message 182 designate that, at the parts where the modification instructions are stated, the information stored in the body ($BODY: lines 14 to 24) and the values of the MAC generated using the key information ($SECRET) of the receiving devices 150 are to be rewritten by the modification instructions and stored. Further, with respect to information used for the key information of the receiving devices 150, the values stored in the value field 115c of the records for storing information specifying the secret values in the information class field 115b of the modification table 115a stored in association with the identification information of the receiving devices 150 that transmitted requests are used.

In addition, the modification instructions stated as "$IDCONV(sip:user1@hitachi.com)" stored in line 16 of the SOAP reference notification message 182 designate that, at the parts where the modification instructions are stated, the address information (ID) "sip:user1@hitachi.com" is to be converted into IDs identifying the receiving devices 150. Further, with respect to information used for the IDs identifying the receiving devices 150, the values stored in the ID2 field 115g of the records storing information specifying "sip:user1@hitachi.com" in the ID1 field 115f of the ID table 115e stored in association with the identification information of the receiving devices 150 that transmitted requests are used.

In addition, the modification instructions stated as "$DATE" stored in line 18 of the SOAP reference notification message 182 designate that, at the parts where the modification instructions as stated, the current date and time is to be rewritten and stored.

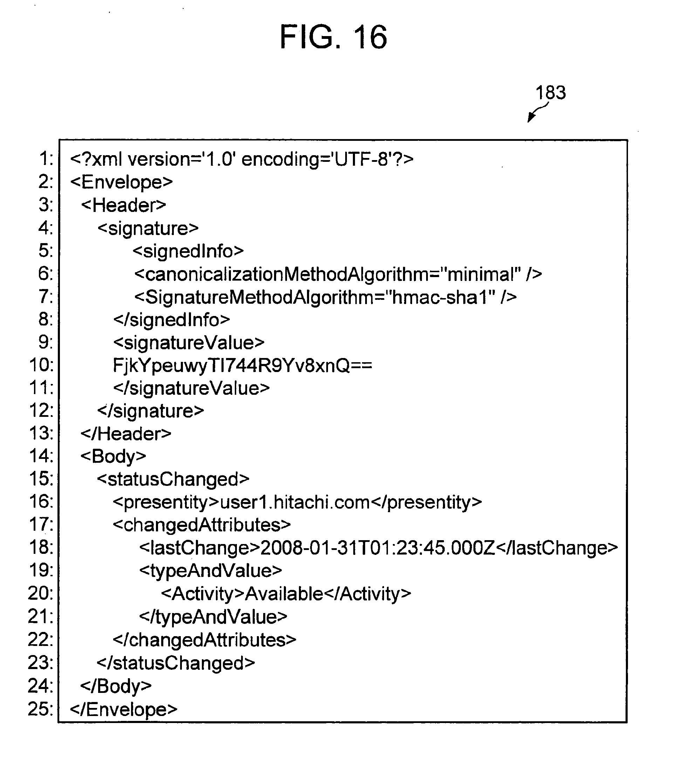

Fig. 16 is a schematic diagram of a SOAP notification message 183 generated from the SOAP reference notification message 182 shown in Fig. 15 by the SOAP notification generator 124. The numbers on the left edge of Fig. 16 are line numbers indicating the lines of the SOAP notification message 183.

Returning to Fig. 12, in step S42, the SOAP communication unit 118 transmits the SOAP notification messages 183 generated in step S41 to the receiving devices 150 via the transmitting and receiving unit 128.

The above description identifies the processing executed by the information providing server 110 in the present embodiment.

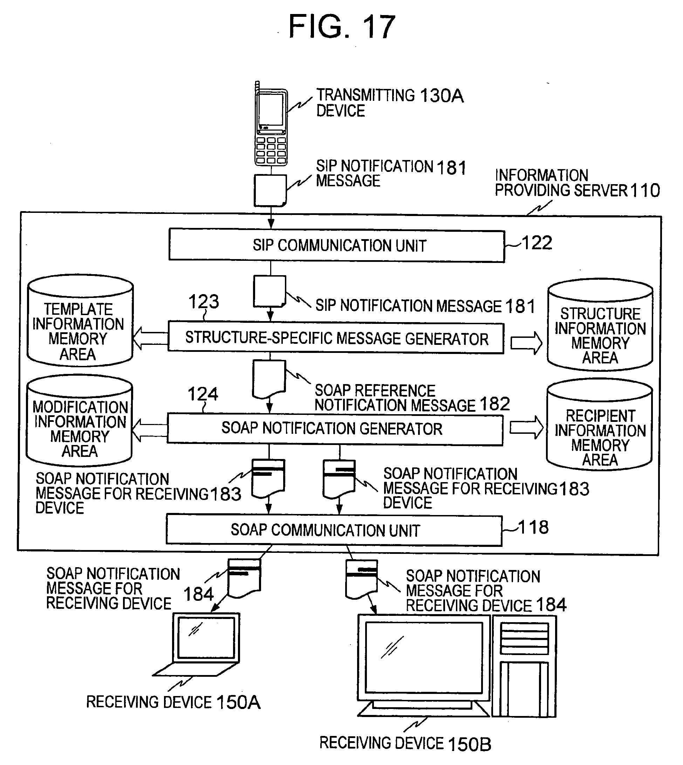

For example, as shown in Fig. 17 (a schematic diagram illustrating the processing executed by the information providing server 110), when a SIP notification message 181 is received from the transmitting device 130A, the structure-specific message generator 123 of the information providing server 110 converts the SIP notification message 181 into the SOAP notification message 183, a data structure commonly corresponding to both the receiving device 150A and the receiving device 150B. The SOAP notification generator 124 then modifies the SOAP notification message 183 into separate SOAP notification messages 184 for the receiving device 150A and the receiving device 150B. The SOAP communication unit 118 then transmits the separate messages to the individual devices.

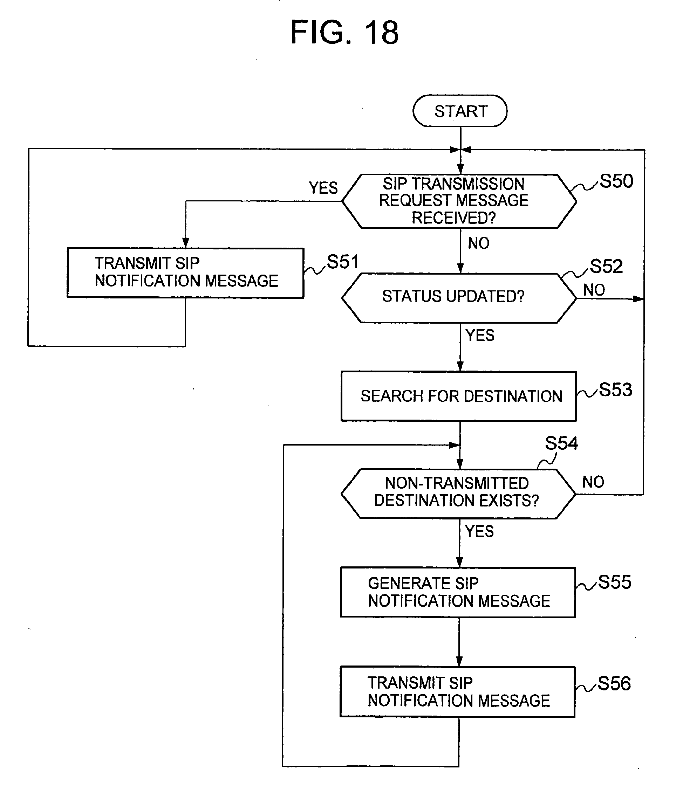

Fig. 18 is a flowchart illustrating processing executed by the transmitting devices 130.

When a transmitting device 130 of the present embodiment initiates operation, the SIP communication unit 137 first checks whether or not a new SIP transmission request message is received via the transmitting and receiving unit 141 (S50). If a new SIP transmission request message is received, the process proceeds to step S51. If a new SIP transmission request message is not received, then the process proceeds to step S52.

In step S50, the destination manager 136 acquires information specifying the address of the destination information providing server 110 that is included in the SIP transmission request message. The destination manager 136 stores the acquired address in the memory unit 131, then proceeds to step S50 and repeats the above process.

In step S52, the status manager 134 checks the status of the transmitting device 130, and then determines whether or not the status of the transmitting device 130 is updated. If the status of the transmitting device 130 is updated, then the process proceeds to step S53. If the status of the transmitting device 130 is not updated, then the process proceeds to step S50 and is repeated.

In step S53, the status change notification generator 135 searches for the address information of the destination information providing server 110 stored in the memory unit 131.

Subsequently, the status change notification generator 135 checks whether or not there exists address information for an information providing server 110 to which a SIP notification message is not sent (S54). If there is any address information t for an information providing server 110 to which a SIP notification message is not sent (step S54: Yes), then the process proceeds to step S55. If there is no address information for an information providing server 110 to which a SIP notification message is not sent (step S54: No), then the process returns to step S50 and is repeated.

In step S55, the status change notification generator 135 generates a SIP notification message (such as the SIP notification message 181 shown in Fig. 14, for example) specifying the updated status of the transmitting device 130, and then outputs the generated message to the SIP communication unit 137.

Subsequently, the SIP communication unit 137 transmits the input SIP notification message to the information providing server 110 via the template information memory area 114 (S56).

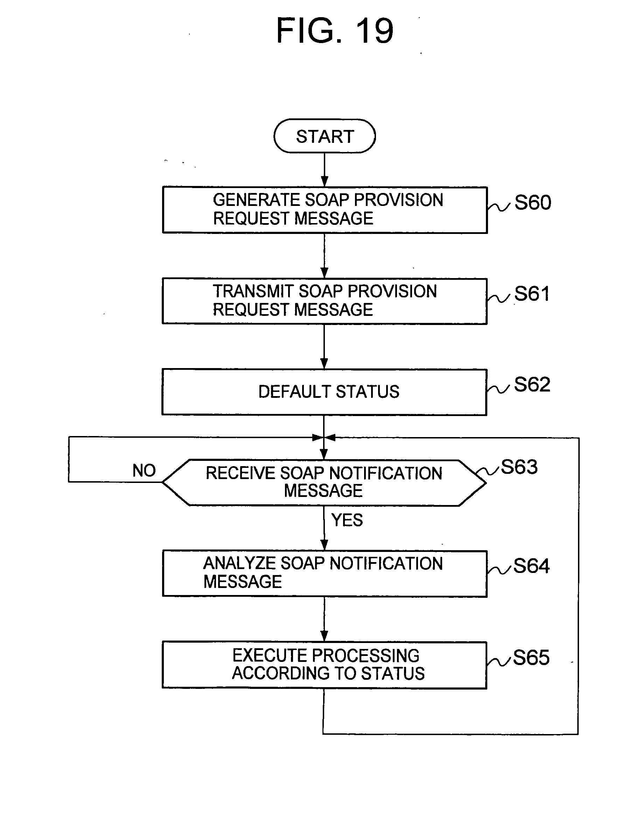

Fig. 19 is a flowchart illustrating processing executed by a receiving device 150.

When a receiving device 150 of the present embodiment initiates operation, the provision request generator 155 first generates a SOAP provision request message (such as the SOAP provision request message 180 shown in Fig. 13, for example) (S60).

The SOAP communication unit 157 then transmits the SOAP provision request message that is generated in step S60 to the information providing server 110 (S61).

Subsequently, the processor 154 displays default status information on the output unit 160 indicating that all transmitting devices 130 are in an offline status (S62).

When the SOAP communication unit 118 receives a SOAP notification message via the transmitting and receiving unit 161 (S63), the SOAP notification analyzer 156 analyzes the SOAP notification message, acquires the updated status of the transmitting device 130 whose status is updated, and then notifies the processor 154 (S64).

The processor 154 then updates the status of the transmitting device 130 as notified by the SOAP notification analyzer 156 and displays the updated status on the output unit 160 (S65). The process then returns to step S63 and is repeated.

In the embodiment described above, the transmitting devices 130 are configured to transmit a SIP notification message to a destination announced via a SIP transmission request message. However, the present invention is not limited to such a configuration, and may also be configured such that a SIP notification message is transmitted to a destination designated by a configuration file or an operator of one of the transmitting devices 130.

In addition, the SOAP messages received by the receiving devices 150 may also use specifications such as the Parlay-X Presence Web Service, a presence interface defined by the Liberty Alliance, or the Liberty ID-SIS Presence Service.

Furthermore, the present embodiment can also be applied in the cases where the data structure of the message transmitted by a transmitting device 130 differs from the data structure of the message that can be received by a receiving device 150. For example, the present embodiment can be suitable for the cases such that, when a SOAP message is received from a transmitting device 130 and then transmitted to a receiving device 150 as a SIP message, or when a SOAP message in accordance with the Parlay-X Presence Web Service specification is received from a transmitting device 130 and then transmitted to a receiving device 150 as a SOAP message in accordance with the Liberty ID-SIS Presence Service specification.

The Parlay-X Presence Web Service specification is described in detail in the following Literature 2, while the Liberty ID-SIS Presence Service specification defined by the Liberty Alliance is described in detail in the following Literature 3.

Literature 2: ETSI, ES 202 391-14 V.2.1 (2006-12), Open Service Access (OSA); Parlay X Web Services; Part 14: Presence, Internet <URL: http://webapp.etsi.org/action%5CPU/20061219/es_2023 9114v010201p.pdf>.

Literature 3: Liberty Alliance Project, Liberty ID-SIS Presence Service Specification, Internet <URL: http://www.projectliberty.org/liberty/content/download/1041/7185/file/dran-liberty-id-sis -presence-v1.0-10.pdf>.

In addition, the SOAP protocol used in the embodiment described above is described in detail in the following Literature 4.

Literature 4: W3C, SOAP Version 1.2 Part 0: Primer (Second Edition), Internet <URL: http://www.w3.org/TR/soap12-part0/>.

In addition, the SIP protocol used in the embodiment described above is described in detail in the following Literature 5.

Literature 5: IETF, RFC3261: SIP: Session Initiation Protocol, Internet <URL: http://www.ietf.org/rfc/rfc3261.txt>.

As described in the present embodiment, the information stated in either a SIP message or a SOAP message represents a message in a format referred to as XML (extensible Markup Language). Since the data structures of such information are differed from each other, below described data structure conversion is ordinarily conducted.

First, a SIP message is read, and a check is performed to determine if the XML included in the SIP message conforms to correct syntax rules and if the data structure is correct. Next, the data inside the tree structure of the checked XML (i.e., the XML tree) is expanded in order to simplify processing such as data structure replacement. Subsequently, the XML tree of the SIP message is converted into an XML tree conforming to the XML data structure stated in a SOAP message. Finally, the XML stated in the SOAP message is output from the converted XML tree.

When converting the XML tree of a SIP message into the XML tree of a SOAP message, it is well-known to perform conversion by following conversion rule definitions referred to as XSLT (extensible Stylesheet Language Transformations) (see the following Literature 6 for more information on XSLT).

Literature 6: W3C, XSL Transformations (XSLT) Version 1.0, Internet <URL: http://www.w3.org/TR/xslt>.

According to the technology described in the above reference, if the SIP message comprises unique information about the devices to receive the SOAP message after conversion, then conversion rule definitions containing the unique information must be created for each individual device. However, according to the present embodiment, data structure conversion is achieved in one pass for devices using the same data structure, and device-specific information included in the converted data structure is rewritten in accordance with the converted data structure. For this reason, the load involved in data structure conversion processing can be reduced.

Consequently, although ordinary data structure conversion processing must track the XML tree in order to search for the parts to convert and thus takes more time compared with rewriting text documents, for example, in the present embodiment, conversion is achieved by rewriting text documents, and thus processing time for the conversion can be shortened.

Furthermore, in the case where formation collected from a particular transmitting device 130 is provided to a plurality of receiving devices 150, the conversion process must be repeated by the number of times equal to the number of receiving devices 150. That leads to a situation where, as the number of receiving devices 150 increases, a quality of conversion could be deteriorated. However, in the present embodiment, data structure conversion is achieved in one pass, and thus quality deterioration can be avoided.

In addition, in the embodiment described in the foregoing, although a notification message is generated for each of the receiving device 150 to which information is transmitted from the information providing server 110, the present invention is not limited to such a configuration. For example, notification messages may be generated for each application on a receiving device 150 that makes use of notification messages. In such a case, data structure conversion is conducted for each data structure corresponding to an application. After converting the data structure, values in the message may be changed to unique values for each individual application.

For example, in NGNs (Next Generation Networks) currently being constructed, it is anticipated that a wide variety of application services will attempt to provide services according to the status of the user. Since a large number of application services will be available to provide information about a particular user, the applied example described above can be implemented in cases described below.

As described above, according to the present embodiment, a information providing server 110 manages processable XML tree types for each type of data structure that can be processed by transmitting devices 130 and, receiving devices 150. Information collected from a transmitting device 130 is first converted into a type of XML tree corresponding to the data structures corresponding to the receiving devices 150. On the basis of the XML tree, messages are output for each type of data structure. The data structure-specific and device-specific messages are treated as text documents, and parts where values are differed among each of the receiving device 150 could be rewritten, thereby generating messages to be respectively provided to the receiving devices 150. Consequently, even when the information to be provided to the receiving devices 150 contains values that are varied among each of the receiving device 150, it is not necessary to prepare conversion rules for respective receiving device 150, and furthermore, the same conversion rules can be applied for devices that are corresponding to the same data structure.

In addition, according to the present embodiment, after converting a data structure of the information received from a transmitting device 130, processing is conducted to rewrite values for each of the receiving device 150. As a result, the data structure conversion processing can be performed without being affected by the physical number of receiving devices 150 and thus, it is possible to complete conversion by single processing. Consequently, performance does not tend to deteriorate even when the number of receiving devices 150 increases.

Furthermore, according to the present embodiment, parts in messages for each data structure, corresponding to dynamically generated information in the messages to be provided to the receiving devices 150, identify information designating a generating means of the information. For this reason, messages processable by the receiving devices 150 can be generated even in the case where dynamically generated information is also to be included therein.

In the embodiment described in the foregoing, the messages for each data structure (such as the SOAP reference notification message shown in Fig. 15, for example) contain modification instructions for rewriting values for each of the receiving device 150. However, the present invention is not limited to such a configuration, and the values of the parts in the messages for each data structure that are to be written with values for each of the receiving device 150 may also be left blank, with modification information associating rewrite parts and modification instructions for rewriting the values in such parts being stored in a separate storage unit. It is thus possible to rewrite values using modification information such as the above.

In addition, in the embodiment described in the foregoing, although an ID table 115e managed by the information providing server 110 is referenced for ID conversion, the present invention is not limited to such a configuration. For example, a database coupled via the network 170 may be referenced, or a server providing ID conversion services may be queried.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. An information providing server (110) that provides information received from a transmitting device to (130A,130B;...) receiving devices, (150A;150B;150C), comprising:
a memory unit (111) that stores
recipient information (112) specifying a transmitting device and a receiving device to be provided with information obtained from the transmitting device, and
structure information (113) specifying a data structure and a receiving device which can use the data structure; and
a controller (117);
wherein
the controller (117) conducts
recipient specification processing that specifies, upon receiving information from the transmitting device (130), the one or more receiving devices (150) to be provided with information obtained from the transmitting device (130), according to the recipient information,
data structure specification processing that specifies, according to the structure information, a data structure which can be used by the one or more receiving devices (150) that are specified in the recipient specification processing,
reference information generation processing that generates reference information by converting a data structure of information received from the transmitting device into a data structure that is specified in the data structure specification processing,
notification information generation processing that generates notification information for each of the receiving device by replacing the data at predetermined parts within the reference information with the data according to each of the receiving device that is specified in the recipient specification processing, and
notification information transmission processing that transmits the receiving device-specific notification information to each of the receiving device (150), that is specified in the recipient specification processing.

2. The information providing server (110) according to Claim 1, wherein:
the reference information generation processing stores, in a template according to a data structure specified by the data structure specification processing, information extracted from the information received from the transmitting device (130), or alternatively, information specified by the information extracted from the information received from the transmitting device (130).

3. The information providing server (110) according to Claim 1, wherein:
the memory unit (111) stores, for each of the receiving device (150), modification information specifying information to be used in notification information that is provided to the receiving device (150), and
the notification information generation processing replaces the data at predetermined parts in the reference information with the data stored in the modification information, or alternatively, with the data specified by the information stored in the modification information.

4. The information providing server (110) according to Claim 3, wherein:
the reference information contains modification instructions that include parts where the data according to the receiving device is stored, and rules for acquiring the data according to the receiving device, and
the notification information generation processing is a process to store acquired the data in accordance with the rules in parts specified by the modification instructions.

5. The information providing server (110) according to Claim 1, wherein:
the data structure is a structure that can be processed by at least one or more of the receiving devices (150).

6. The information providing server (110) according to Claim 1, wherein a data structure of information received from the transmitting device (130) differs from a data structure of information transmitted to the receiving devices (150).

7. A program by which a computer functions as an information providing server (110) that provides information received from a transmitting device (130) to a receiving devices (150) wherein:
the program makes the computer function as
a memory unit (111) for storing recipient information specifying a transmitting device (130) and a receiving device (150) to be provided with information obtained from the transmitting device (130), and structure information specifying a data structure and a receiving device (150) which can use the data structure; and
a control unit (117), and
the program makes the control unit (117) conduct,
recipient specification processing that specifies, upon receiving information from the transmitting device (130), the one or more receiving devices (150) to be provided with information obtained from the transmitting device (130), according to the recipient information,
data structure specification processing that specifies, according to the structure information, a data structure which can be used by the one or more receiving devices (150) that are specified in the recipient specification processing,
reference information generation processing that generates reference information by converting a data structure of information received from the transmitting device (130) into a data structure that is specified in the data structure specification processing,
notification information generation processing that generates notification information for each of the receiving device (150) by replacing the data at predetermined parts within the reference information with the data according to each of the receiving device that is specified in the recipient specification processing, and
notification information transmission processing that transmits the receiving device-specific notification information to each of the receiving device (150) that is specified in the recipient specification processing.

8. The program according to Claim 7, wherein:
the reference information generation processing stores, in a template according to a data structure specified by the data structure specification processing, information extracted from the information received from the transmitting device, or alternatively, information specified by the information extracted from the information received from the transmitting device.

9. The program according to Claim 7, wherein:
the memory (111) unit stores, for each of the receiving device (150), modification information specifying information to be used in notification information that is provided to the receiving device (150),, and
the notification information generation processing replaces the data at predetermined parts in the reference information with the data stored in the modification information, or alternatively, with the data specified by the information stored in the modification information.

10. The program according to Claim 9, wherein:
the reference information contains modification instructions that include parts where the data according to the receiving device, and rules for acquiring the data according to the receiving device (150), and wherein
the notification information generation processing is a process to store acquired the data in accordance with the rules in parts specified by the modification instructions.

11. The program according to Claim 7, wherein:
the data structure is a structure that can be processed by at least one or more of the receiving devices (150).

12. The program according to Claim 7, wherein:
a data structure of the information received from the transmitting device (130) differs from a data structure of the information transmitted to the receiving devices (150).

13. An information providing method conducted by an information providing server (110) comprising a memory unit (111) that stores
recipient information specifying a transmitting device and a receiving device to be provided with information obtained from the transmitting device (130), and
structure information specifying a data structure and a receiving device which can use the data structures, and
a controller (117), and,
the controller comprises the step of:
recipient specification processing that specifies, upon receiving information from the transmitting device (130), the one or more receiving devices (150) to be provided with information obtained from the transmitting device (130), according to the recipient information,
data structure specification processing that specifies, according to the structure information, a data structure which can be used by the one or more receiving devices (150) that are specified in the recipient specification processing,
reference information generation processing that generates reference information by converting a data structure of information received from the transmitting device (130) into a data structure that is specified in the data structure specification processing,
notification information generation processing that generates notification information for each of the receiving device by replacing the data at predetermined parts within the reference information with the data according to the receiving device (150) that is specified in the recipient specification processing, and
notification information transmission processing that transmits the receiving device-specific notification information to each of the receiving device (150) that is specified in the recipient specification processing.

14. An information providing system (108), comprising:
a transmitting device (130);
a receiving device (150); and
an information providing server (110) that provides information received from the transmitting device (130) to the plurality of receiving devices (150);
wherein:
the transmitting device (130) comprises a controller that conducts processing to transmit information to the information providing server (110),
the information providing server (110) comprises a memory unit (111) that stores
recipient information specifying a transmitting device (130) and a receiving devices to be provided with information obtained from the transmitting device (130), and
structure information specifying a data structure and a receiving device (150) which can use the data structure,
and a controller (117),
the controller (117) of the information providing server (110) conducts
recipient specification processing that specifies, upon receiving information from the transmitting device (130), one or more receiving devices (150) to be provided with information obtained from the transmitting device (130), according to the recipient information,
data structure specification processing that specifies, according to the structure information, a data structure which can be used by the one or more receiving devices (150) that are specified in the recipient specification processing,
reference information generation processing that generates reference information by converting a data structure of the information received from the transmitting device (130) into a data structure that is specified in the data structure specification processing,
notification information generation processing that generates notification information for each of the receiving device (150) by replacing the data at predetermined parts within the reference information with the data according to each of the receiving device (150) that is specified in the recipient specification processing, and
notification information transmission processing that transmits the receiving device-specific notification information to each of the receiving device (150) that is specified in the recipient specification processing, and
a receiving device (150) comprises controllers (153) that conduct processing according to the notification information received from the information providing server (110).
